# EUROPEAN PATENT SPECIFICATION

(11) **EP 4 250 413 B1**
(45) Date of publication and mention of the grant of the patent: **29.04.2026**
(21) Application number: 22746276.9
(22) Date of filing: 28.01.2022
(51) Int. Cl.: H01M 10/0587, H01M 4/13, H01M 50/586, H01M 10/052

(54) **ELECTRODE ASSEMBLY AND METHOD FOR MANUFACTURING SAME**
ELEKTRODENANORDNUNG UND VERFAHREN ZUR HERSTELLUNG DAVON
ENSEMBLE ÉLECTRODE ET SON PROCÉDÉ DE FABRICATION

(30) Priority: 28.01.2021 KR 20210012400; 27.01.2022 KR 20220012250
(43) Date of publication of application: 27.09.2023
(73) Proprietor: LG Energy Solution, Ltd., Seoul 07335 (KR)
(72) Inventor: LEE, Kwanhee, Daejeon 34122 (KR); RYU, Duk Hyun, Daejeon 34122 (KR); KIM, Sue Jin, Daejeon 34122 (KR); JANG, Jinsu, Daejeon 34122 (KR)
(74) Representative: Goddar, Heinz J.
(86) International application number: PCT/KR2022/001555
(87) International publication number: WO 2022/164250

(56) References cited:
- JP-A- 2009 164 061
- JP-A- 2020 194 732
- KR-A- 20060 022 358
- KR-A- 20150 122 940
- KR-A- 20170 043 240
- KR-A- 20170 043 240
- US-A1- 2017 110 721

## Description

### [TECHNICAL FIELD]

The present disclosure relates to an electrode assembly and a manufacturing method of the same, and more particularly to an electrode assembly having with improved energy density and a manufacturing method of the same.

### [BACKGROUND]

Recently, the demand for portable electronic products such as notebooks, video cameras, cellular phones or the like has rapidly increased, and electric vehicles, energy storage batteries, robots, satellites or the like have been actively developed. Thereby, many studies have been conducted on the secondary battery used as its driving power source.

The secondary battery includes, for example, a nickel cadmium battery, a nickel hydrogen battery, a nickel zinc battery, a lithium secondary battery, and the like. Among them, the lithium secondary batteries are widely used in the field of high-tech electronic devices because they have advantages, for example, hardly exhibiting memory effects in comparison with nickel-based secondary batteries and thus being freely charged and discharged, and having very low self-discharge rate, high operating voltage and high energy density per unit weight.

Depending on the shape of the battery case, a secondary battery is classified into a cylindrical battery where an electrode assembly is mounted in a cylindrical metal can, a prismatic battery where an electrode assembly is mounted in a prismatic metal can, and a pouch-type battery where an electrode assembly is mounted into a pouch type case formed of an aluminum laminate sheet. Among them, the cylindrical battery has an advantage that it has a relatively large capacity and is structurally stable.

The electrode assembly mounted in the battery case is an electricity-generating device enabling charge and discharge that has a cathode/separator/anode laminate structure, and is classified into a jelly-roll type, a stack type, and a stack/folding type. The jelly-roll type is a shape in which a separator interposed between a cathode and an anode, each made of an active material-coated long sheet, is rolled, the stack type is a shape in which a plurality of cathodes and a plurality of anodes each having a predetermined size are laminated in this order such that a separator is interposed therebetween, and a stack/folding type is a combination of a jelly-roll type and a stack type. Of these, the jelly-roll-type electrode assembly has advantages that manufacture is easy and the energy density per weight is high.

Recently, in order to realize high energy density and reduce costs, development is progressing in the direction of increasing the size of the battery cell. As the energy increases in accordance with the size of the battery cell, the resistance per battery cell should decrease. In order to reduce resistance, a method of using an electrode current collector of an electrode as an electrode tab can be used instead of a method of attaching an electrode tab to an electrode. At this time, due to the characteristics of the electrode manufacturing process of applying the electrode slurry onto the electrode current collector, a portion in which the loading amount is reduced occurs at the boundary portion between the anode active material portion applied with an anode slurry and the anode current collector. Considering the N/P ratio, metallic lithium may be precipitated on the cathode active material portion facing the portion where the loading amount is reduced. Here, the N/P ratio is a value that is obtained by dividing the capacity of the anode calculated in consideration of the area and capacity per mass of the anode by the capacity of the cathode obtained in consideration of the area and capacity per mass of the cathode, and it generally has a value of 1 or more. That is, the anode is manufactured to have a large capacity. For reference, if the N/P ratio is less than 1, metallic lithium is easily precipitated during charging and discharging, which acts as a cause of rapidly deteriorating the safety of the battery during high-rate charging and discharging. In other words, the N/P ratio has a significant effect on the safety and capacity of the battery.

Due to concerns about the precipitation of metallic lithium as described above, the cathode active material portion cannot be positioned on the cathode portion facing the portion in which the loading amount of the anode is reduced. This is a cause of failure to increase the energy density of the battery cell.

US 2017/110721 A1 discloses a lithium-ion secondary battery that includes a positive electrode current collector and a positive electrode active material layer retained on the positive electrode current collector. The positive electrode active material layer contains positive electrode active material particles, a conductive agent, and a binder. The positive electrode active material particles each include a shell portion made of primary particles of a layered lithium-transition metal oxide, a hollow portion formed inside the shell portion, and a through-hole penetrating through the shell portion.

KR 20170043240 A discloses an electrode assembly which comprises a positive electrode, a negative electrode, and a separation membrane interposed between the positive and negative electrodes. The positive and negative electrodes include active material coating parts on one or both sides of a plate shaped current collector, and electrode tabs, which are not coated by an electrode active material, are formed on one end of the current collector. An electrode tab of the positive electrode and an electrode tab of the negative electrode face each other and are formed on both ends of the electrode assembly.

### [DETAILED DESCRIPTION OF THE INVENTION]

### [Technical Problem]

It is an object of the present disclosure to provide an electrode assembly having improved energy density by extending the section of the cathode active material portion, and a manufacturing method of the same.

However, the problem to be solved by the embodiments of the present disclosure is not limited to the above-described problems, and can be variously expanded within the scope of the technical idea included in the present disclosure.

### [Technical Solution]

The invention is defined by the subject matter of the independent claims.

According to an embodiment of the present disclosure, there is provided an electrode assembly comprising: an anode; a cathode; and a separator disposed between the anode and the cathode, wherein the anode, the cathode and the separator are rolled together to form a jelly-roll structure, wherein the anode includes an anode current collector and an anode active material portion formed by applying an anode active material onto the anode current collector, wherein the cathode includes a cathode current collector and a cathode active material portion formed by applying a cathode active material onto the cathode current collector, wherein an anode uncoated portion, to which the anode active material is not applied among the anode current collector, extends in a first direction, wherein a cathode uncoated portion, to which the cathode active material is not applied among the cathode current collector, extends in a second direction opposite to the first direction, wherein the cathode active material portion includes a loading reduction portion in which the loading amount of the cathode active material is smaller than that of the adjacent region, and wherein the loading reduction portion is disposed at one end part of the cathode in the first direction.

The anode active material portion includes an anode boundary portion forming a boundary between the anode active material portion and the anode uncoated portion, and the anode boundary portion is disposed at a portion corresponding to the loading reduction portion, based on a direction perpendicular to the first direction.

The loading reduction portion may be formed such that the loading amount of the cathode active material gradually decreases as it goes in the first direction.

The first direction and the second direction may be directions parallel to the height direction of the jelly roll structure.

The anode uncoated portion may be extended more than the separator in the first direction, and the cathode uncoated portion may be extended more than the separator in the second direction.

The electrode assembly may further comprise an insulating layer formed on at least one of the anode and the cathode. The insulating layer formed on the anode may cover at least a part of the anode uncoated portion and the anode active material portion, and the insulating layer formed on the cathode may cover at least a part of the cathode uncoated portion and the cathode active material portion.

The insulating layer formed on the anode may be formed so as to cover an end part of the anode active material portion along the first direction and a part of the anode uncoated portion adjacent thereto. The insulating layer formed on the cathode may be formed so as to cover an end part of the cathode active material portion along the second direction and a part of the cathode uncoated portion adjacent thereto.

The insulating layer formed on the anode may be disposed at a place that does not overlap with the loading reduction portion, based on a direction perpendicular to the first direction.

At least partial sections of the anode uncoated portion and the cathode uncoated portion may be processed in the form of a plurality of segment pieces that can be bent independently of each other.

According to another embodiment of the present disclosure, there is provided a method for manufacturing an electrode assembly, the method comprising the steps of: manufacturing an anode sheet such that anode active material portions extending in a first direction and second direction applied with an anode active material and anode uncoated portions not applied with an anode active material are alternately disposed on an anode current collector along the first direction, wherein the anode active material portion includes an anode boundary portion forming a boundary between the anode active material portion and the anode uncoated portion; manufacturing a cathode sheet such that a cathode active material portion extending in a first direction and second direction applied with a cathode active material and a cathode uncoated portion not applied with a cathode active material are alternately disposed on a cathode current collector along the first direction, wherein the each of the cathode active material portions includes a loading reduction region in which the loading amount of the cathode active material gradually decreases along the first direction on both sides of a central part of the loading reduction region; slitting each of the anode uncoated portions and the anode active material portions in a direction parallel to the second direction to manufacture an anode; slitting each of the cathode uncoated portions and the cathode active material portions in a direction parallel to the second direction to manufacture a cathode, wherein the cathode active material portion is slitted at the central part of the loading reduction region along the second direction ; and rolling one of the anodes and one of the cathodes together with a separator to form a jelly roll structure, wherein the cathode active material portion of said one of the cathodes includes a loading reduction portion that is disposed at one end part of said one of the cathodes and in which the loading amount of the cathode active material is smaller than that of the adjacent region, and in the jelly roll structure, the anode boundary portion is positioned at a portion corresponding to the loading reduction portion based on a direction perpendicular to the first direction.

### [Advantageous Effects]

According to embodiments of the present disclosure, by providing a loading reduction portion in which the loading amount of the cathode active material is small than that of the adjacent region on the cathode, the section of the cathode active material portion can be increased without concerns about deposition of lithium. Thereby, the energy density of the electrode assembly can be improved.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is a diagram showing an electrode assembly according to an embodiment of the present disclosure;
Fig. 2 is a cross-sectional view showing a cross section taken along the cutting line A-A' of Fig. 1;
Figs. 3 and 4 are diagrams showing a state in which an anode is manufactured according to an embodiment of the present disclosure;
Fig. 5 is a perspective view showing an anode according to an embodiment of the present disclosure;
Figs. 6 and 7 are diagrams showing a state in which a cathode is manufactured according to an embodiment of the present disclosure;
Fig. 8 is a perspective view showing a cathode according to an embodiment of the present disclosure;
Fig. 9 is a diagram showing an electrode assembly according to a comparative example of the present disclosure;
Fig. 10 is a cross-sectional view showing a cross section taken along the cutting line B-B' of Fig. 9;
Fig. 11 is a diagram showing a state in which an anode is manufactured according to a comparative example of the present disclosure;
Fig. 12 is a diagram showing a state in which a cathode is manufactured according to a comparative example of the present disclosure;
Figs. 13 and 14 are cross-sectional views showing an anode, a cathode and separators according to other embodiments of the present disclosure, respectively;
Fig. 15 is a perspective view showing an electrode assembly according to another embodiment of the present disclosure; and
Figs. 16 to 18 are cross-sectional views showing an anode, a cathode, and separators according to other embodiments of the present disclosure, respectively.

### [DETAILED DESCRIPTION OF THE EMBODIMENTS]

Hereinafter, various embodiments of the present disclosure will be described in detail with reference to the accompanying drawings so that those skilled in the art can easily carry out them.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

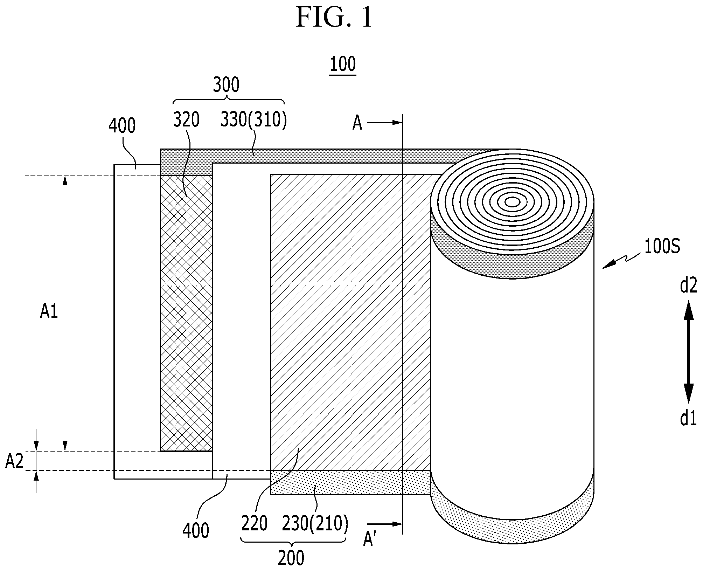

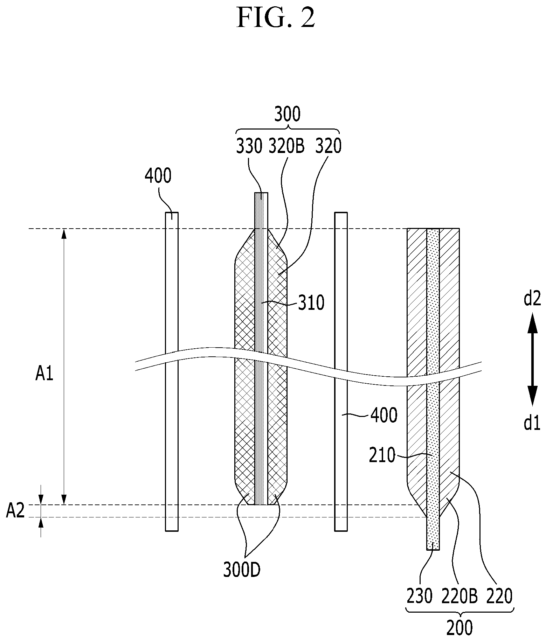

Fig. 1 is a diagram showing an electrode assembly according to an embodiment of the present disclosure, and Fig. 2 is a cross-sectional view showing a cross section taken along the cutting line A-A' of Fig. 1.

Referring to Figs. 1 and 2, the electrode assembly 100 according to an embodiment of the present disclosure includes an anode 200, a cathode 300 and a separator 400. The separator 400 is disposed between the anode 200 and the cathode 300. The anode 200, the cathode 300 and the separator 400 are rolled together to form a jelly roll structure 100S. Here, the jelly roll structure 100S refers to a structure formed by rolling the anode 200, the cathode 300 and the separator 400. In addition, when the jelly roll structure 100S is formed, it is preferable that a separator 400 is further arranged on the outer side in order to prevent the anode 200 and the cathode 300 from contacting each other.

The anode 200 includes an anode current collector 210 and an anode active material portion 220 formed by applying an anode active material onto the anode current collector 210. In particular, as illustrated, the anode active material can be applied onto both surfaces of the anode current collector 210 to form an anode active material portion 220. Further, the anode uncoated portion 230 to which the anode active material is not applied among the anode current collector 210 is extended in the first direction d1. The anode uncoated portion 230 continues along one end part of the rolled anode 200. Further, the anode uncoated portion 230 extends more than the separator 400 in the first direction d1. Thereby, the anode uncoated portion 230 can be exposed at one end part of the jelly roll structure 100S in the first direction.

The cathode 300 includes a cathode current collector 310 and a cathode active material portion 320 formed by applying a cathode active material onto a cathode current collector 310. In particular, as illustrated, the cathode active material can be applied onto both surfaces of the cathode current collector 310 to form a cathode active material portion 320. Further, the cathode uncoated portion 330 to which the cathode active material is not applied among the cathode current collector 310 is extended in the second direction d2. The cathode uncoated portion 330 continues along one end part of the rolled cathode 300. Further, the cathode uncoated portion 330 extends more than the separator 400 in the second direction d2. Thereby, the cathode uncoated portion 330 can be exposed at one end part of the jelly roll structure 100S in the second direction.

Here, the first direction d1 and the second direction d2 are directions facing each other. Further, the first direction d1 and the second direction d2 may be directions parallel to the height direction of the jelly roll structure 100S.

The electrode assembly 100 according to the present embodiment is not in the form of attaching a separate electrode tab, but has a shape in which the anode uncoated portion 230 of the anode current collector 210 and the cathode uncoated portion 330 of the cathode current collector 310 themselves are used as electrode tabs in order to reduce resistance. That is, the electrode assembly 100 according to the present embodiment has a kind of tab-less structure, and the anode uncoated portion 230 and the cathode uncoated portion 330 may be defined as electrode tabs by themselves.

At this time, the cathode active material portion 320 according to the present embodiment includes a loading reduction portion 300D having a smaller loading amount of the cathode active material than in the adjacent region, and the loading reduction portion 300D is disposed at one end part of the cathode 300 in the first direction d1. Further, more specifically, the loading reduction portion 300D may be formed such that the loading amount of the cathode active material gradually decreases as it goes in the first direction d1.

Here, the loading amount means the application amount of the active material per unit area. In a portion with a large loading amount, a large amount of an anode active material or a cathode active material is applied to a unit area, so that the thickness of the anode active material portion or the cathode active material portion can be relatively thick. In the portion with a small loading amount, a small amount of an anode active material or a cathode active material is applied to a unit area, so that the thickness of the anode active material portion or the cathode active material portion can be relatively thin.

An active material portion can be formed by applying a slurry containing an active material. In such a process, a boundary portion in which the loading amount gradually decreases may be formed between the uncoated portion and the active material portion.

Specifically, the anode active material portion 220 may include an anode boundary portion 220B forming a boundary between the anode active material portion 220 and the anode uncoated portion 230. The anode boundary portion 220B may be formed such that the loading amount decreases toward a direction in which the anode uncoated portion 230 is positioned.

Similarly, the cathode active material portion 320 may include a cathode boundary portion 320B forming a boundary between the cathode active material portion 320 and the cathode uncoated portion 330. The cathode boundary portion 320B may be formed such that the loading amount decreases as it goes toward a direction in which the cathode uncoated portion 330 is positioned.

As described above, the anode boundary portion 220B or the cathode boundary portion 320B in which the loading amount gradually decreases is naturally generated in the process of applying the slurry containing the active material to the anode current collector 210 or the cathode current collector 310.

Specifically, the anode boundary portion 220B and the cathode boundary portion 320B may be regions where a sliding phenomenon occurs. The sliding phenomenon means a phenomenon in which an electrode active material is less applied in the boundary region of the slurry application due to the spreading of a slurry containing active materials, so that the slurry in the application boundary region has an approximately inclined shape. Here, when the electrode is entirely dried, as the solvent contained in the slurry evaporates and the volume of the slurry decreases, a sliding phenomenon can be further deepened near the boundary between the region applied with the active material and the region not applied with the active material.

At this time, the amount of the cathode active material may be smaller than the amount of the anode active material in the region corresponding to the cathode boundary portion 320B, based on the direction perpendicular to the second direction d2. Even so, since this has a value of N/P ratio greater than 1, a problem of precipitating metallic lithium does not occur.

The problem is the region corresponding to the anode boundary portion 220B. Based on the direction perpendicular to the first direction d1, in the region corresponding to the anode boundary portion 220B, the amount of the anode active material may be smaller than the amount of the cathode active material. At this time, since the N/P ratio has a value less than 1, a problem of precipitating metallic lithium may occur.

Therefore, in the present embodiment, a loading reduction portion 300D is provided on the cathode 300, and based on a direction perpendicular to the first direction d1, the anode active material portion 220 may be positioned at a portion corresponding to the loading reduction portion 300D. More specifically, based on a direction perpendicular to the first direction d1, the anode boundary portion 220B may be disposed at a portion corresponding to the loading reduction portion 300D.

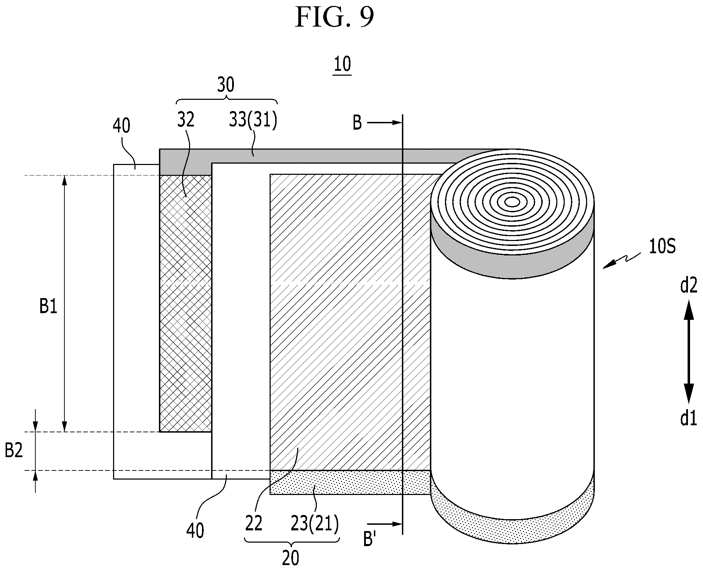

A loading reduction portion 300D in which the loading amount of the cathode active material is smaller than the adjacent region is provided at a position corresponding to the anode boundary portion 220B where the loading amount gradually decreases, thereby capable of increasing the section applied with the cathode active material without concerns about precipitation of lithium. In particular, in order to correspond to the shape of the anode boundary portion 220B in which the loading amount gradually decreases toward the direction in which the anode uncoated portion 230 is positioned, the loading reduction portion 300D may have a shape in which the loading amount of the cathode active material gradually decreases as it goes in the first direction d1. Therefore, the N/P ratio for the anode 200 and the cathode 300 can be maintained high in the region where the anode boundary portion 220B is formed, thereby preventing precipitation of lithium. More details will be described later through comparison with the comparative examples of Figs. 9 to 12.

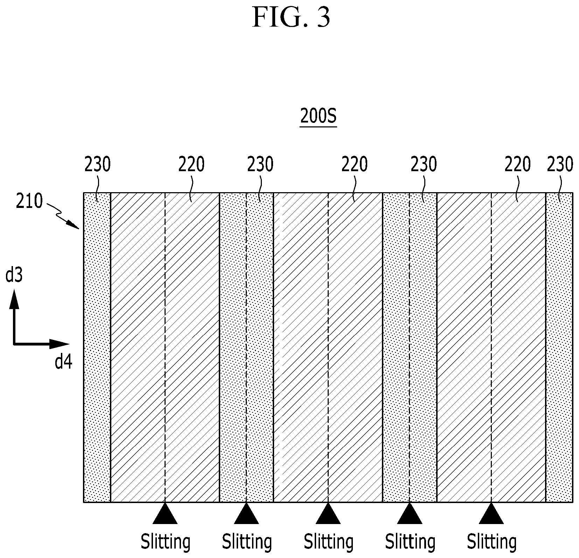

Next, a method of manufacturing an electrode assembly according to an embodiment of the present disclosure will be described in detail with reference to Figs. 3 to 8.

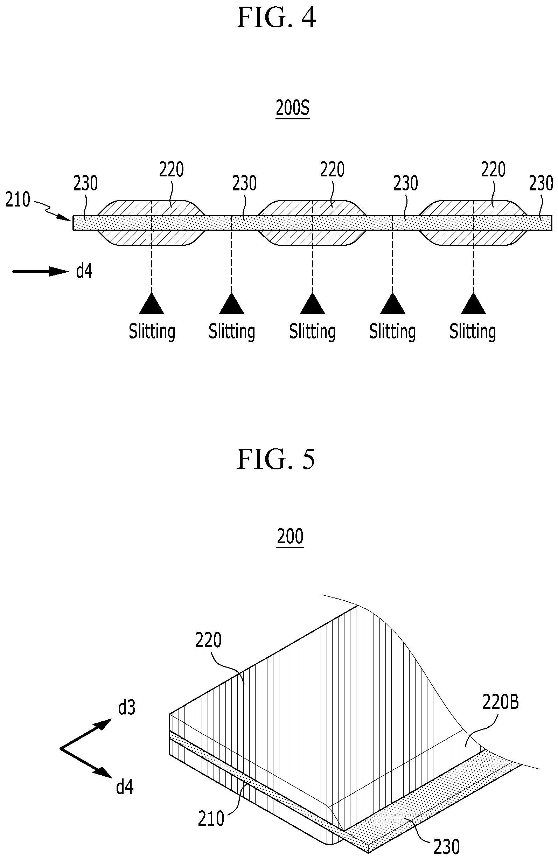

Figs. 3 and 4 are diagrams showing a state in which an anode is manufactured according to an embodiment of the present disclosure. Specifically, Fig. 3 is a plan view of the anode sheet as viewed from above, and Fig. 4 is a front view of the anode sheet of Fig. 3 as viewed from the front.

Referring to Figs. 3 and 4, the method of manufacturing an electrode assembly according to an embodiment of the present disclosure includes a step of manufacturing the anode sheet 200S such that the anode active material portion 220 applied with the anode active material and the anode uncoated portion 230 not applied with the anode active material are alternately disposed on the anode current collector 210.

Specifically, the anode active material portion 220 may be formed by applying the anode active material so as to continue along the third direction d3, and a plurality of anode active material portions 220 may be disposed separately from each other in a fourth direction d4 perpendicular to the third direction d3. That is, the anode uncoated portion 230 can be positioned between the plurality of anode active material portions 220.

Here, the third direction d3 and the fourth direction d4 are directions for mainly describing the anode sheet 200S, and are directions unrelated to the first direction d1 and the second direction d2 in the jelly roll structure 100S described above.

Then, a step of slitting the anode uncoated portion 230 and the anode active material portion 220 to manufacture the anode 200 may be followed. Fig. 5 is a perspective view showing an anode according to an embodiment of the present disclosure.

Referring to Figs. 3 to 5, slitting can be performed on each of the anode uncoated portion 230 and the anode active material portion 220 in a direction parallel to the third direction d3. Thereby, a plurality of anodes 200 as shown in Fig. 5 can be manufactured from the anode sheet 200S. That is, the anode 200 of Fig. 5 corresponds to one of several anodes manufactured by slitting the anode sheet 200S of Figs. 3 and 4. By slitting the anode uncoated portion 230 and the anode active material portion 220 of the anode sheet 200S, respectively, the anode 200 in which the anode uncoated portion 230 is extended on one side can be manufactured.

When the anode active material portion 220 is formed, a slurry containing the anode active material can be applied onto the anode current collector 210. In this slurry application process, at the boundary between the anode active material portion 220 and the anode uncoated portion 230, the anode boundary portion 220B may be formed in which the loading amount decreases as it goes toward the direction in which the anode uncoated portion 230 is positioned.

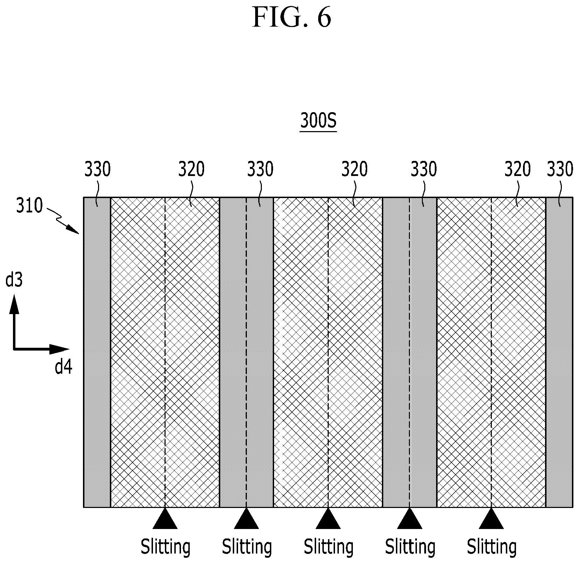

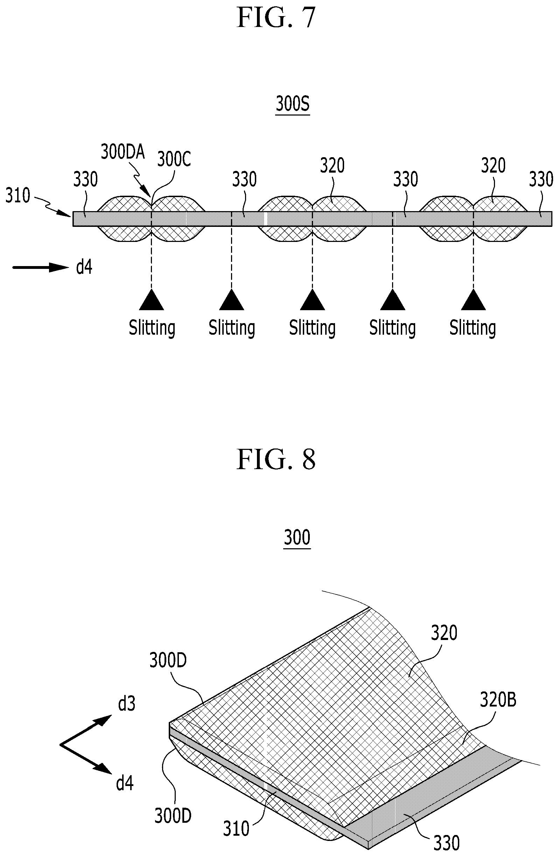

Figs. 6 and 7 are diagrams showing a state in which a cathode is manufactured according to an embodiment of the present disclosure. Specifically, Fig. 6 is a plan view of the cathode sheet as viewed from above, and Fig. 7 is a front view of the cathode sheet of Fig. 6 as viewed from the front.

Referring to Figs. 6 and 7, the method of manufacturing an electrode assembly according to an embodiment of the present disclosure includes a step of manufacturing a cathode sheet 300S such that a cathode active material portion 320 applied with a cathode active material and a cathode uncoated portion 330 not applied with a cathode active material are alternately disposed on the cathode current collector 310.

Specifically, the cathode active material portion 320 can be formed by applying the cathode active material so as to continue along the third direction d3, and a plurality of cathode active material portions 320 may be disposed separately from each other in a fourth direction d4 perpendicular to the third direction d3. That is, the cathode uncoated portion 330 may be positioned between the plurality of cathode active material portions 320.

Here, the third direction d3 and the fourth direction d4 are directions for mainly describing the cathode sheet 300S, and are directions unrelated to the first direction d1 and the second direction d2 in the jelly-roll structure 100S described above.

Then, a step of slitting the cathode uncoated portion 330 and the cathode active material portion 320 to manufacture the cathode 300 may be followed. Fig. 8 is a perspective view showing a cathode according to an embodiment of the present disclosure.

Referring to Figs. 6 to 8, slitting may be performed on each of the cathode uncoated portion 330 and the cathode active material portion 320 in a direction parallel to the third direction d3 as indicated by dashed lines in Figs. 6 and 7. Thereby, a plurality of cathode 300 as shown in Fig. 8 can be manufactured from the cathode sheet 300S. That is, the cathode 300 of Fig. 8 corresponds to one of several cathodes manufactured by slitting the cathode sheet 300S of Figs. 6 and 7. By slitting the cathode uncoated portion 330 and the cathode active material portion 320 among the cathode sheet 300S, respectively, the cathode 300 in which the cathode uncoated portion 330 is extended on one side can be manufactured.

When the cathode active material portion 320 is formed, a slurry containing the cathode active material can be applied onto the cathode current collector 310, and in this slurry application process, a cathode boundary portion 320B, where the loading amount decreases as it goes toward the direction in which the cathode uncoated portion 330 is positioned, may be formed at the boundary between the cathode active material portion 320 and the cathode uncoated portion 330.

Then, referring to Figs. 1, 5 and 8 together, a step of rolling the manufactured anode 200 and cathode 300 together with the separator 400 to form the jelly roll structure 100S may be followed. At this time, in the jelly roll structure 100S, the anode uncoated portion 230 may be extended more than the separator 400 in the first direction d1, and the cathode uncoated portion 330 may be extended more than the separator 400 in a second direction d2 opposite to the first direction d1.

Meanwhile, referring to Figs. 6 to 8 again, in the method of manufacturing an electrode assembly according to an embodiment of the present disclosure, the cathode sheet 300S includes a loading reduction region 300DA in which a loading amount of the cathode active material is smaller than that of an adjacent region. The method of forming the loading reduction region 300DA is not particularly limited, and as an example, it can be formed by adjusting the degree of application of the slurry.

In the step of manufacturing the cathode 300, the loading reduction region 300DA of the cathode active material portion 320 is slitted. The slitted loading reduction region 300DA corresponds to the loading reduction portion 300D in which the loading amount of the cathode active material is smaller than that of the adjacent region in the jelly roll structure 100S shown in Figs. 1 and 2.

Specifically, a loading reduction region 300DA where the loading amount of the cathode active material is smaller than that of an adjacent region is formed in the cathode active material portion 320 formed on the cathode sheet 300S. As shown in Fig. 7, the loading reduction region 300DA may be formed in the center of the cathode active material portion 320. Meanwhile, the loading reduction region 300DA may be configured such that the loading amount of the cathode active material gradually decreases it goes toward the central part 300C of the loading reduction region 300DA, and in the step of manufacturing the cathode 300, the loading reduction portion 300D according to the present embodiment can be provided by slitting the central part 300C of the loading reduction region 300DA.

That is, when applying the slurry containing the cathode active material, by forming the loading reduction region 300DA and slitting the central part 300C of the loading reduction region 300DA, it is possible to manufacture a plurality of cathodes 300 in which the loading reduction portion 300D is formed.

Referring to Fig. 8, a loading reduction portion 300D can be provided at one end part of the manufactured cathode 300, and a cathode uncoated portion 330 can be provided at the other end of the cathode 300 facing the one end.

Referring to Figs. 1 and 2, when this cathode 300 is rolled to form the jelly roll structure 100S, the loading reduction portion 300D is disposed at one end part of the cathode 300 in the first direction d1, and the cathode uncoated portion 330 may be disposed at one end of the cathode 300 in the second direction d2.

Further, as the central part 300C of the loading reduction region 300DA is slitted, the loading reduction portion 300D may be formed such that the loading amount of the cathode active material gradually decreases as it goes toward the first direction d1.

Further, in the jelly roll structure 100S, the anode active material portion 220 may be positioned at a portion corresponding to the loading reduction portion 300D based on a direction perpendicular to the first direction d1. More specifically, in the jelly roll structure 100S, the anode boundary portion 220B may be positioned at a portion corresponding to the loading reduction portion 300D based on a direction perpendicular to the first direction d1.

The corresponding positional relationship between the loading reduction portion 300D and the anode boundary portion 220B is omitted because it overlaps with the contents described above.

Next, referring to Figs. 9 to 12, the electrode assembly according to a comparative example of the present disclosure will be described, and the advantages of the electrode assembly according to the present embodiment as compared to the electrode assembly according to the present comparative example will be described.

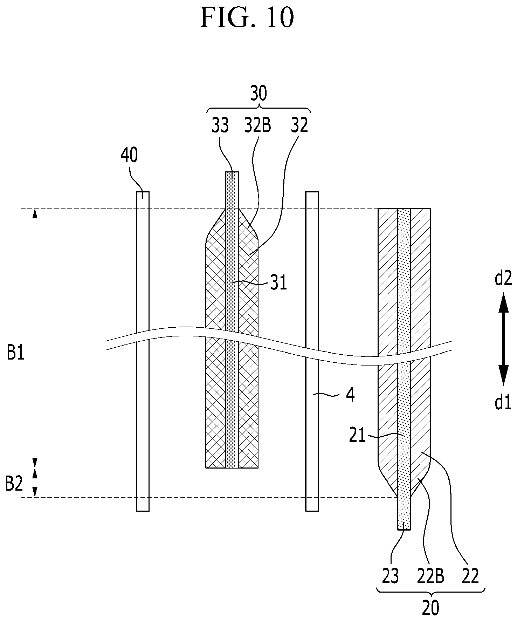

Fig. 9 is a diagram showing an electrode assembly according to a comparative example of the present disclosure. Fig. 10 is a cross-sectional view showing a cross section taken along the cutting line B-B' of Fig. 9.

Referring to Figs. 9 and 10, the electrode assembly 10 according to the comparative example of the present disclosure includes an anode 20, a cathode 30 and a separator 40, wherein the anode 20, the cathode 30 and the separator 40 are rolled to form a jelly roll structure 10S.

The anode 20 may include an anode current collector 21, an anode active material portion 22, and an anode uncoated portion 23. Further, the anode uncoated portion 23 may be extended in the first direction d1, and the anode active material portion 22 may include an anode boundary portion 22B that forms a boundary between the anode active material portion 22 and the anode uncoated portion 23 and gradually decreases the loading amount.

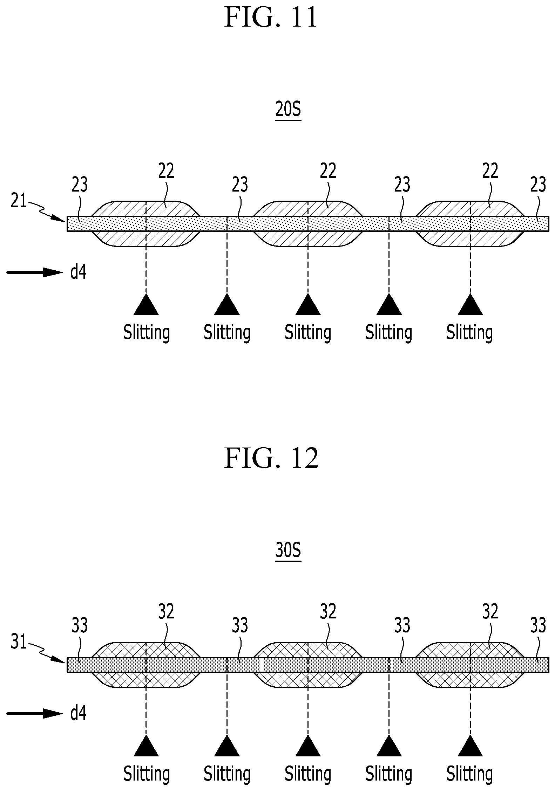

Fig. 11 is a diagram showing a state in which an anode is manufactured according to a comparative example of the present disclosure. Specifically, this is a diagram for explaining a process of manufacturing the anode 20 included in the electrode assembly 10 of Figs. 9 and 10.

Referring to Fig. 11, an anode sheet 20S is manufactured such that the anode active material portion 22 and the anode uncoated portion 23 are alternately disposed along the fourth direction d4, and then the anode uncoated portion 23 and the anode active material portion 22 can be slitted to manufacture a plurality of anodes 20.

Meanwhile, referring to Figs. 9 and 10 again, the cathode 30 may include a cathode current collector 31, a cathode active material portion 32, and a cathode uncoated portion 33. Further, the cathode uncoated portion 33 may be extended in a second direction d2 opposite to the first direction d1, and the cathode active material portion 32 may include a cathode boundary portion 32B that forms a boundary between the cathode active material portion 32 and the cathode uncoated portion 33 and gradually decreases a loading amount.

Fig. 12 is a diagram showing a state in which a cathode is manufactured according to a comparative example of the present disclosure. Specifically, it is a diagram for explaining a process of manufacturing the cathode 30 included in the electrode assembly 10 of Figs. 9 and 10.

Referring to Fig. 12, the cathode sheet 30S is manufactured such that the cathode active material portion 32 and the cathode uncoated portion 33 are alternately disposed along the fourth direction d4, and then the cathode uncoated portion 33 and the cathode active material portion 32 can slitted to manufacture a plurality of cathodes 30.

Then, the manufactured anode 20 and cathode 30 can be rolled together with the separator 40 to manufacture the electrode assembly 10 according to a comparative example of the present disclosure.

That is, the electrode assembly 10 according to the comparative example of the present disclosure may have a structure similar to that of the electrode assembly 100 according to the present embodiment. except that only the loading reduction portion 300D (see Fig. 2) is formed.

Referring to Figs. 9 and 10, in the case of the electrode assembly 10 according to the present comparative example, the cathode active material portion 32 cannot be positioned at a portion corresponding to the anode boundary portion 22B based on a direction perpendicular to the first direction d1. If the cathode material portion 32 is extended up to a portion corresponding to the anode boundary portion 22B, the corresponding portion is a portion appearing a low N/P ratio value, and metallic lithium is highly likely to be precipitated. Therefore, in order to prevent precipitation of lithium, it is necessary to limit the length of the cathode active material portion 32. That is, the cathode active material portion 32 can be formed only in the region B1 shown, and the cathode active material portion 32 cannot be formed in the region B2. This results in a reduction in the length of the cathode active material portion 32 due to the anode boundary portion 22B.

On the other hand, referring to Figs. 1 and 2, in the case of the electrode assembly 100 according to the present embodiment, a cathode active material portion 320, particularly a loading reduction portion 300D, can be disposed at a position corresponding to the anode boundary portion 220B based on a direction perpendicular to the first direction d1. Since the loading reduction portion 300D where the loading amount of the cathode material is smaller than that of the adjacent region is provided at a position corresponding to the anode boundary portion 220B, the N/P ratio can be maintained high in the corresponding portion, and it is possible to prevent precipitation of lithium. Thereby, the cathode active material portion 320 can be formed as much as the region A1, and the region A2 in which the cathode active material portion 320 cannot be formed can be reduced. In one example, the height direction width of the cathode 300 relative to the height direction width of the anode 200 may be increased to 98% or more.

Comparing the region A1 in Figs. 1 and 2 with the region B1 in Figs. 9 and 10, since the electrode assembly 100 according to the present embodiment can increase the length of the cathode material portion by the loading reduction portion 300D, it can have a higher energy density in a limited space than the electrode assembly 10 according to the comparative example.

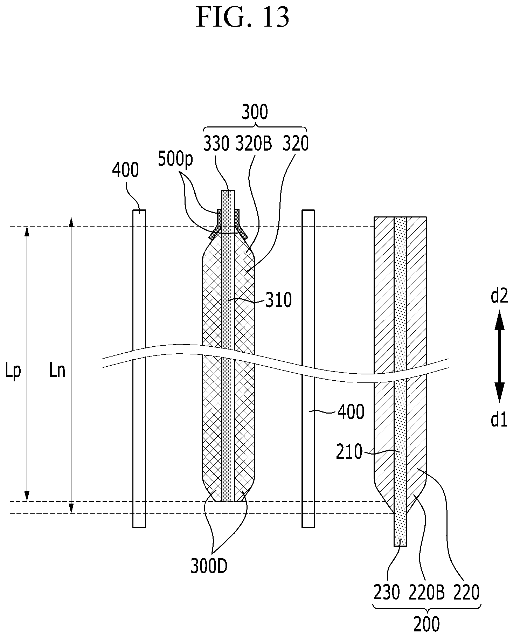

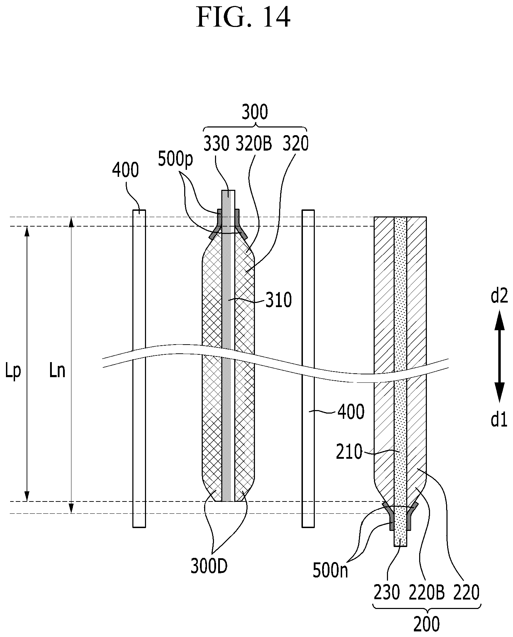

Next, an electrode assembly according to other embodiments of the present disclosure will be described in detail with reference to Figs. 13 and 14. Since the embodiment of Fig. 13 or Fig. 14 is similar to the previous embodiment of Fig. 2, duplicate descriptions of configurations that are substantially the same as or similar to those of the preceding embodiment are omitted, and the differences from the previous embodiment are mainly described.

Figs. 13 and 14 are cross-sectional views showing an anode, a cathode and separators according to other embodiments of the present disclosure, respectively.

Referring to Figs. 13 and 14, the electrode assembly according to the present embodiment includes an anode 200, a cathode 300 and a separator 400, wherein the anode 200, the cathode 300 and the separator 400 are rolled together to form a jelly roll structure.

The anode 200 includes an anode current collector 210 and an anode active material portion 220, and the anode uncoated portion 230 is extended more than the separator 400 in the first direction d1. The cathode 300 includes a cathode current collector 310 and a cathode active material portion 320, and the cathode uncoated portion 330 is extended more than the separator 400 in the second direction d2.

Meanwhile, with respect to the height direction of the jelly roll structure described above, the length Lp of the cathode active material portion 320 may be shorter than the length Ln of the anode active material portion 220. In addition, the cathode active material portion 320 may be positioned inside the anode active material portion 220 in the height direction. For example, the length Ln in the height direction of the anode active material portion 220 may be larger than the length Lp in the height direction of the cathode active material portion 320.

Furthermore, the length Lp in the height direction of the cathode active material portion 320 may be formed shorter than the length in the height direction of the region of the anode active material portion 220 excluding the anode boundary portion 220B. This structure is intended to prevent that the above-mentioned N/P ratio is reduced to 1 or less and the lithium metal from being precipitated.

Meanwhile, the anode active material portion 220 and the cathode active material portion 320 may not protrude more than the separator 400 in the height direction. If the anode active material portion 220 and the cathode active material portion 320 protrude more than the separator 400 in the height direction, the possibility of contact between the anode 200 and the cathode 300 can be increased. If that is the case, an internal short circuit may occur in the contact area, increasing the risk of ignition. Therefore, it is important that the anode active material portion 220 and the cathode active material portion 320 do not protrude more than the separator 400 in the height direction. That is, the anode active material portion 220 and the cathode active material portion 320 are preferably positioned inside the separator 400.

Meanwhile, the electrode assembly according to the present embodiment may further include insulating layers 500n and 500p formed on at least one of the anode 200 and the cathode 300. In order to minimize the possibility of contact between the anode 200 or the cathode 300, the electrode assembly of the present disclosure may further include insulating layers 500n and 500p formed on at least one of the anode 200 and the cathode 300.

Fig. 13 illustrates an insulating layer 500p formed on the cathode 300. The insulating layer 500p formed on the cathode 300 may cover at least a part of the cathode uncoated portion 330 and the cathode active material portion 320.

Electrical contact between the anode 200 and the cathode 300 can be effectively prevented by the insulating layer 500p. More specifically, it is possible to effectively prevent electrical contact between the cathode uncoated portion 330 and the anode active material portion 220.

The insulating layer 500p may be provided on at least one surface of the cathode 300. For example, the insulating layer 500p may be provided on both surfaces of the cathode 300. Although not illustrated in Fig. 13, in the jelly roll structure, another portion of the rolled anode 200 is positioned on the left side of the separator 400 positioned on the left side. Therefore, in order to prevent electrical contact with the anode 200 positioned on the left and right sides, the insulating layer 500p is preferably provided on both surfaces of the cathode 300.

The insulating layer 500p can be provided in a region of the cathode 300 that is likely to face the anode active material portion 220. For example, the end part of the insulating layer 500p in the second direction d2 may be positioned at the same height as the end part of the separator 400 in the second direction d2 or outside the end part of the separator 400 in the second direction d2. More specifically, referring to Fig. 13 as an example, an end part of the insulating layer 500p in the second direction d2 may be positioned at the same height as an end part of the separator 400 in the second direction d2. Since the separator 400 is rolled between the cathode 300 and the anode 200 and protrudes along the height direction, electrical contact between the cathode 300 and the anode 200 can be prevented to some extent. However, since a flow such as meandering of the cathode 300 or the anode 200 may occur inside the secondary battery including the electrode assembly, the possibility that the anode 200 is positioned near the end part of the separator 400 cannot be excluded. Therefore, when the anode 200 is positioned up to the end of the separator 400 or the anode 200 protrudes outward more than the end of the separator 400 due to the occurrence of a flow such as meandering, electrical contact between the cathode 300 and the anode 200 becomes unavoidable. Alternatively, if the separator 400 is damaged for some reasons, electrical contact between the cathode 300 and the anode 200 becomes unavoidable.

Therefore, in order to prevent electrical contact between the cathode 300 and the anode 200 even if such a case occurs, it is preferable that the insulating layer 500p provided in the cathode 300 extends up to at least the same height as the end part of the separator 400 in the second direction d2 or up to the outside of the end part of the separator 400 in the second direction d2.

However, when the insulating layer 500p covers the entirety of the cathode uncoated portion 330, since the cathode uncoated portion 330 cannot function as an electrode tab, the insulating layer 500p preferably covers a part of the cathode uncoated portion 330. That is, the cathode uncoated portion 330 may have a shape that further protrudes to the outside of the insulating layer 500p.

The insulating layer 500p may be an insulating coating layer or an insulating tape provided on the boundary region between the cathode uncoated portion 330 and the cathode active material portion 320. However, the shape of the insulating layer 500p is not limited thereto, and can be employed in the present disclosure as long as the insulating layer 500p has a shape that can be attached to the cathode 300 while ensuring insulating performance. Meanwhile, the insulating layer 500p may include, for example, an oil-based SBR binder and alumina oxide in order to ensure insulating performance.

The insulating layer 500p may simultaneously cover at least a part of the cathode uncoated portion 330 and at least a part of the cathode active material portion 320. For example, the insulating layer 500p may be provided on a boundary region between the cathode active material portion 320 and the cathode uncoated portion 330. For example, the insulating layer 500p may cover at least a part of the cathode boundary portion 320B. For example, the insulating layer 500p can extend to a point of about 0.3 ~ 5 mm, more preferably about 1.5 ~ 3 mm from boundary point between the cathode uncoated portion 330 and the cathode active material portion 320 within the entire region of the cathode uncoated portion 330.

If the insulating layer 500p is absent, because an internal short circuit may occur due to the contact between the cathode 300 and the anode 200, it is preferable that the insulating layer 500p extends to a position where electrical contact between the cathode 300 and the anode 200 does not occur.

Meanwhile, the insulating layer 500p can be extended to a point of about 0.1~ 3 mm, more preferably about 0.2~0.5 mm from a boundary point between the cathode uncoated portion 330 and the cathode active material portion 320 within the entire region of the cathode active material portion 320.

When the insulating layer 500p covers a part of the cathode active material portion 320, the capacity loss of the battery occurs and, therefore, it is necessary to minimize the cover length of the holding part of the insulating layer 500p. However, since the cathode active material portion 320 may be in contact with the anode 200, the insulating layer 500p preferably covers at least a part of the cathode active material portion 320 in order to prevent this.

Meanwhile, if described with reference to Fig. 13, the separator 400 may protrude outward from the end part of the cathode 300 in the first direction d1, and may protrude outward from the end part of the anode 200 in the second direction d2.

Meanwhile, the separator 400 does not protrude more than the end part of the anode 200 in the first direction d1. This is intended for the anode uncoated portion 230 to function as an electrode tab. Similarly, the separator 400 does not protrude more than the end part of the cathode 300 in the second direction d2. This is intended for the cathode uncoated portion 330 to function as an electrode tab.

Meanwhile, one end part of the anode 200 facing the insulating layer 500p with the separator 400 interposed therebetween may have a shape that does not protrude outward from one end part of the separator 400. For example, referring to Fig. 13, the cathode 300 is provided with an insulating layer 500p, and one end part of the anode 200 facing the insulating layer 500p may be positioned inside the separator 400. Therefore, even if the cathode uncoated portion 330 protrudes to the outside of the separator 400, since one end part of the anode 200 is positioned inside the separator 400, the possibility of contact between the cathode 300 and the anode 200 is greatly reduced.

In Fig. 14, not only the insulating layer 500p formed on the cathode 300 but also the insulating layer 500n formed on the anode 200 are illustrated. Of course, although not illustrated, as another embodiment, an insulating layer formed only on the anode 200 is also included in the present disclosure. The insulating layer 500n formed on the anode 200 may cover at least a part of the anode uncoated portion 230 and the anode active material portion 220. The insulating layer 500n may simultaneously cover at least a part of the anode uncoated portion 230 and at least a part of the anode active material portion 220. For example, the insulating layer 500n may be provided on a boundary region between the anode active material portion 220 and the anode uncoated portion 230. For example, the insulating layer 500n may cover at least a part of the anode boundary portion 220B.

A configuration similar to that of the insulating layer 500p to be formed on the cathode 300 described above can be applied to the insulating layer 500n formed on the anode. In the following, duplicate descriptions will be omitted and differences from the previous embodiment will be mainly described.

Based on a direction perpendicular to the first direction d1, the insulating layer 500n formed on the anode 200 may be positioned at a place that does not overlap the loading reduction portion 300D of the cathode 300. A portion where the insulating layer 500n is formed based on a direction perpendicular to the first direction d1 is an unreacted region. Therefore, if the insulating layer 500n is positioned at a place that overlaps the loading reduction portion 300D based on a direction perpendicular to the first direction d1, the capacity loss of the battery occurs as much as that amount, and the reason to provide the loading reduction portion 300D disappears. Therefore, as shown in Fig. 14, the insulating layer 500n covering at least a part of the anode boundary portion 220B can be positioned so as not to overlap with the loading reduction portion 300D based on a direction perpendicular to the first direction d1, thereby intending to prevent capacity loss of the battery.

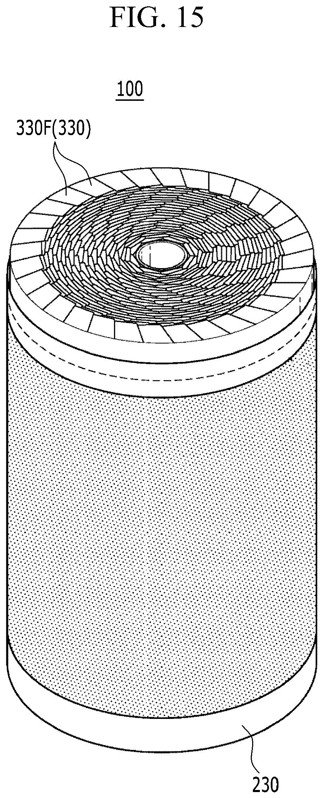

Next, an electrode assembly according to other embodiments of the present disclosure will be described in detail with reference to Figs. 15 to 18 and the like.

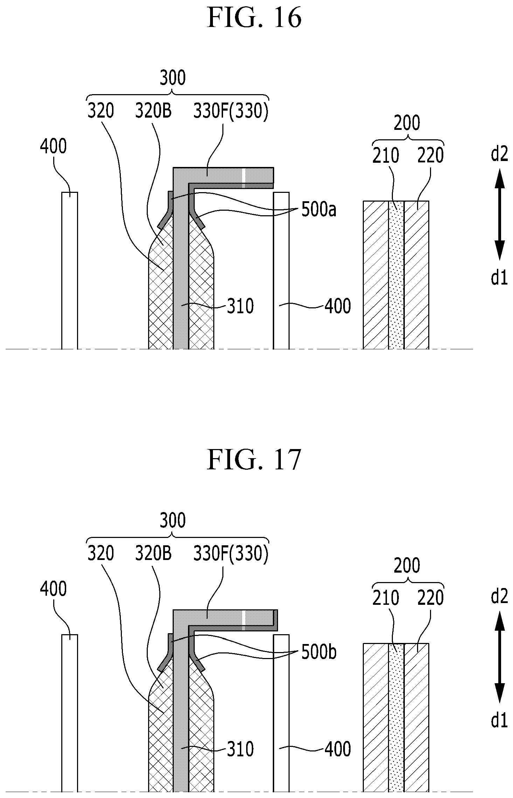

Fig. 15 is a perspective view showing an electrode assembly according to another embodiment of the present disclosure. Figs. 16 to 18 are cross-sectional views showing an anode, a cathode, and separators according to other embodiments of the present disclosure, respectively.

First, referring to Figs. 15 and 16, the electrode assembly 100 according to another embodiment of the present disclosure may have a structure in which at least a part of the cathode uncoated portion 330 or the anode uncoated portion 230 is bent toward the rolling center of the jelly roll structure.

At least partial sections of the anode uncoated portion 230 and the cathode uncoated portion 330 may be processed in the form of a plurality of segment pieces that can be bent independently of each other. Figs. 15 and 16 show that at least partial sections of the cathode uncoated portion 330 are processed in the form of a plurality of segment pieces 330F that can be bent independently of each other. Here, the plurality of segment pieces 330F may have a structure that overlaps multiple layers while being bent toward the rolling center side. For example, the plurality of segment pieces 330F may be notched with a laser. The segment piece 330F can be formed by a known metal foil cutting process such as ultrasonic cutting or punching.

In the following, the segment pieces 330F of the cathode uncoated portion 330 is mainly described, but the same or similar structures can be applied to the anode uncoated portion 230.

In order to prevent the active material layer and/or the insulating layer 500a from being damaged during bending of the cathode uncoated portion 330, it is preferable to provide a predetermined gap between the lower end of the cutting line among the fragment pieces 330F and the active material layer. This is because stress is concentrated near the lower end of the cutting line when the cathode uncoated portion 330 is bent. This gap is preferably 0.2 to 4 mm. When the gap is adjusted to the corresponding numerical range, it is possible to prevent the active material layer and/or the insulating layer 500a near the lower end of the cutting line from being damaged by stress generated during bending of the cathode uncoated portion 330. Further, the gap can prevent damage to the active material layer and/or the insulating layer 500a due to tolerances during notching or cutting of the segment pieces.

The bending direction of the cathode uncoated portion 330 may be a direction toward the rolling center of the jelly roll structure. When the cathode uncoated portion 330 has such a bent shape, spaces in the upper and lower directions occupied by the cathode uncoated portion 330 may be reduced, thereby improving the energy density. In addition, the increased coupling area between the cathode uncoated portion 330 and the current collector (not shown) can improve the coupling force and reduce the resistance.

In Figs. 15 and 16, a state in which the segment piece 330F of the cathode uncoated portion 330 is bent in one direction is illustrated. The one direction may be a direction toward a rolling center of the jelly roll structure as described above.

The cathode uncoated portion 330 can be adjacent to the anode 200 side beyond the separator 400. Therefore, it is preferable that the insulating layer 500a extends to the end of the cathode uncoated portion 330 on the surface facing the rolling center side among both surfaces of the cathode uncoated portion 330. According to such a structure, even if the cathode uncoated portion 330 is bent toward the rolling center side and is close to the anode 200 side beyond the separator 400, electrical contact between the cathode 300 and the anode 200 can be prevented. Therefore, an internal short circuit of the secondary battery can be effectively prevented.

Meanwhile, among both surfaces of the cathode uncoated portion 330, the surface opposite to the surface facing the rolling center side can be provided with the insulating layer 500a in only a partial region. That is, the cathode uncoated portion 330 can be exposed to the outside in the remaining partial region of the surface opposite to the surface facing the rolling center side of both surfaces of the cathode uncoated portion 330. This allows electrical contact with an adjacent current collector plate (not shown). That is, the cathode uncoated portion 330 is exposed in the region that is not covered by the insulating layer 500a among the entire region of the cathode uncoated portion 330 and can be electrically coupled to the current collector plate. Further, the cathode uncoated portion 330 can be coupled to the current collector plate by welding in a region not covered by the insulating layer 500a among the entire region of the cathode uncoated portion 330. The welding may be, for example, laser welding. The laser welding can be performed in a way that partially melts the current collector plate base material, and may also be performed in a state in which solder for welding is interposed between the current collector plate and the cathode uncoated portion 330. In this case, the solder preferably has a lower melting point as compared to the current collector plate and the cathode uncoated portion 330. Meanwhile, in addition to laser welding, resistance welding, ultrasonic welding, etc. are possible, but the welding method is not limited thereto.

Referring to Fig. 17, the insulating layer 500b may have a shape that wraps around the end of the cathode uncoated portion 330. Specifically, the insulating layer 500b may have a structure that wraps around the end surface of the cathode uncoated portion 330. For example, when the length of the bent segment pieces 330F of the cathode uncoated portion 330 is long, the possibility of contact with the anode 200 increases. Furthermore, the bent segment pieces 330F may be further bent by flow or external pressure. At this time, the possibility that the end surface of the cathode uncoated portion 330 is in contact with the anode 200 increases. However, according to the above configuration of the present disclosure, even if the cathode uncoated portion 330 is further bent or deformed, the insulating layer 500b covers the end surface of the cathode uncoated portion 330, and therefore, electrical contact between the cathode 300 and the anode 200 can be prevented.

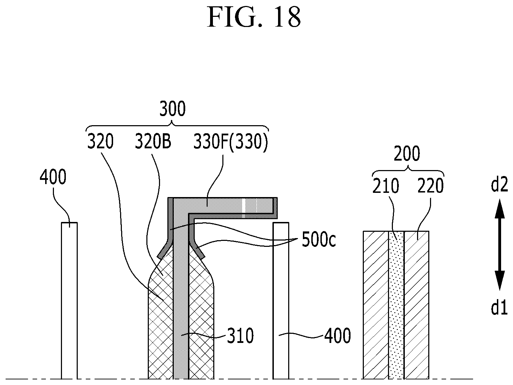

Referring to Fig. 18, the insulating layer 500c can extend up to a bending point of the cathode uncoated portion 330 on the surface opposite to the surface facing the rolling center side of both surfaces of the cathode uncoated portion 330. Although not illustrated in Fig. 18, in the jelly roll structure, another portion of the rolled anode 200 is positioned on the left side of the separator 400 positioned on the left side. That is, the cathode 300 has a possibility of making electrical contact not only with the portion of the anode 200 positioned on the right side of the cathode 300, but also with the anode 200 positioned on the left side of the cathode 300. However, according to the above configuration of the present disclosure, electrical contact with the anode 200 positioned on both sides of the cathode 300 can be reliably prevented.

Meanwhile, the electrode assembly according to the present embodiment may be housed in a battery that is opened on one side. The material of the battery can may be aluminum. Such a battery can may be electrically connected to the electrode assembly. The battery can may be electrically connected to one of the cathode 300 and the anode 200. For example, the battery can be electrically connected to the anode 200 of the electrode assembly. In this case, the battery can have the same polarity as the anode 200. The anode uncoated portion 230 of the anode 200 may be electrically connected to the current collector and finally electrically connected to the battery can.

Meanwhile, a terminal passing through the central part of the closed end formed in the battery can is provided, and this terminal may be electrically connected to the other one of the cathode 300 and the anode 200. For example, the terminal may be electrically connected to the cathode 300. In this case, the terminal may have the same polarity as the cathode 300. The cathode uncoated portion 330 of the cathode 300 may be electrically connected to the current collector plate and finally electrically connected to the terminal.

In addition, the battery can and the terminal are electrically insulated from each other. Electrical insulation between the terminal and the battery can may be realized in various ways. For example, insulation can be realized by interposing an insulating gasket between the terminal and the battery can.

Meanwhile, the secondary battery cell including the electrode assembly according to the present embodiment may be, for example, a secondary battery cell having a form factor ratio (defined as the ratio of the diameter of the secondary battery cell divided by the height, that is, the ratio of the diameter (Φ) to the height (H)) of greater than about 0.4.

Here, the form factor means a value indicating the diameter and height of the secondary battery cell. The secondary battery cell according to an embodiment of the present disclosure may be, for example, a 46110 cell, a 48750 cell, a 48110 cell, a 48800 cell, or a 46800 cell. In the numerical value representing the form factor, the two preceding numbers represent the diameter of the cell, and the next two numbers represent the height of the cell, and the last number 0 represents that the cross section of the cell is circular.

The secondary battery cell according to an embodiment of the present disclosure may be a cylindrical battery cell having a substantially cylindrical shape, which may be a cylindrical battery cell having a diameter of about 46 mm, a height of about 110 mm, and a form factor ratio of about 0.418.

A secondary battery cell according to another embodiment may be a cylindrical battery cell having a substantially cylindrical shape, which may be a cylindrical battery cell having a diameter of about 48 mm, a height of about 75 mm, and a form factor ratio of about 0.640.

A secondary battery cell according to yet another embodiment may be a cylindrical battery cell having a substantially cylindrical shape, which may be a cylindrical battery cell having a diameter of about 48 mm, a height of about 110 mm, and a form factor ratio of about 0.418.

A secondary battery cell according to yet another embodiment may be a cylindrical battery cell having a substantially cylindrical shape, which may be a cylindrical battery cell having a diameter of about 48 mm, a height of about 80 mm, and a form factor ratio of about 0.600.

A secondary battery cell according to yet another embodiment may be a cylindrical battery cell having a substantially cylindrical shape, which may be a cylindrical battery cell having a diameter of about 46 mm, a height of about 80 mm, and a form factor ratio of about 0.575.

Conventionally, secondary battery cells having a form factor ratio of about 0.4 or less have been used. That is, conventionally, for example, 18650 cells, 21700 cells, and the like have been used. For the 18650 cells, the diameter is about 18 mm, the height is about 65 mm, and the form factor ratio is about 0.277. For the 21700 cells, the diameter is about 21 mm, the height is about 70 mm, and the form factor ratio is about 0.300.

The terms representing directions such as the front side, the rear side, the left side, the right side, the upper side, and the lower side have been used in embodiments of the present disclosure, but the terms used are provided simply for convenience of description and may become different according to the position of an object, the position of an observer, or the like.

The electrode assembly according to the present embodiment described above can be housed in a battery can to form a battery cell. A plurality of such battery cells can be gathered to constitute a battery module, and the battery module can be mounted together with various control and protection systems such as a BMS (battery management system), and a cooling system to form a battery pack.

The battery cell, the battery module or the battery pack can be applied to various devices. For example, it can be applied to vehicle means such as an electric bike, an electric vehicle, and a hybrid electric vehicle, and may be applied to various devices capable of using a secondary battery, without being limited thereto.

### [Description of Reference Numerals]

100: electrode assembly
200: anode
300: cathode
400: separator

## Claims

1. An electrode assembly (100) comprising:
an anode (200);
a cathode (300); and
a separator (400) disposed between the anode (200) and the cathode (300),
wherein the anode (200), the cathode (300) and the separator (400) are rolled together to form a jelly-roll structure (100S),
wherein the anode (200) includes an anode current collector (210) and an anode active material portion (220) formed by applying an anode active material onto the anode current collector (210),
wherein the cathode (300) includes a cathode current collector (310) and a cathode active material portion (320) formed by applying a cathode active material onto the cathode current collector (310),
wherein an anode uncoated portion (230), to which the anode active material is not applied among the anode current collector (210), extends in a first direction (d1),
wherein a cathode uncoated portion (330), to which the cathode active material is not applied among the cathode current collector (310), extends in a second direction (d2) opposite to the first direction (d1),
wherein the anode active material portion (220) includes an anode boundary portion (220B) forming a boundary between the anode active material portion (220) and the anode uncoated portion (230),
**characterized in that**
the cathode active material portion (320) includes a loading reduction portion that is disposed at one end part of the cathode (300) in the first direction (d1), wherein the loading reduction portion is a portion in which the loading amount of the cathode active material is smaller than that of an adjacent region, and
the anode boundary portion (220B) is disposed at a portion corresponding to the loading reduction portion (320D) of the cathode active material portion (320), based on a direction perpendicular to the first direction (d1).

2. The electrode assembly (100) according to claim 1, wherein:
the loading reduction portion (320D) is formed such that the loading amount of the cathode active material gradually decreases as it goes in the first direction (d1).

3. The electrode assembly (100) according to claim 1 or 2, wherein:
the first direction (d1) and the second direction (d2) are directions parallel to the height direction of the jelly roll structure.

4. The electrode assembly (100) according to one of claims 1 to 3, wherein:
the anode uncoated portion (230) is extended more than the separator (400) in the first direction (d1), and
the cathode uncoated portion (330) is extended more than the separator (400) in the second direction (d2).

5. The electrode assembly (100) according to one of claims 1 to 4,
further comprising an insulating layer (500n, 500p) formed on at least one of the anode (200) and the cathode (300),
the insulating layer (500n) formed on the anode (200) covers at least a part of the anode uncoated portion (230) and the anode active material portion (220), and
the insulating layer (500p) formed on the cathode (300) covers at least a part of the cathode uncoated portion (330) and the cathode active material portion (320).

6. The electrode assembly (100) according to claim 5, wherein:
the insulating layer (500n) formed on the anode (200) is formed so as to cover an end part of the anode active material portion (220) along the first direction (d1) and a part of the anode uncoated portion (230) adjacent thereto, and
the insulating layer (500p) formed on the cathode (300) is formed so as to cover an end part of the cathode active material portion (320) along the second direction (d2) and a part of the cathode uncoated portion (330) adjacent thereto.

7. The electrode assembly (100) according to claim 5 or 6 wherein:
the insulating layer (500n) formed on the anode (200) is disposed at a place that does not overlap with the loading reduction portion, based on a direction perpendicular to the first direction (d1).

8. The electrode assembly (100) according to one of claims 1 to 7, wherein:
at least partial sections of the anode uncoated portion (230) and the cathode uncoated portion (330) are processed in the form of a plurality of segment pieces (330F) that can be bent independently of each other.

9. The electrode assembly (100) according to one of claims 1 to 8, wherein the cathode active material portion (320) includes a cathode boundary portion (320B) in which the loading amount of the cathode active material gradually decreases and which forms a boundary between the cathode active material portion (320) and the cathode uncoated portion (330);
wherein the amount of the cathode active material in the cathode boundary portion (320B) is smaller than the amount of the anode active material of the anode active material portion (220) corresponding to the cathode boundary portion (320B), based on the direction perpendicular to the second direction (d2).

10. The electrode assembly (100) according to one of claims 1 to 9, wherein the N/P ratio of the electrode assembly (100) is larger than 1.

11. A method for manufacturing an electrode assembly (100), the method comprising the steps of:
manufacturing an anode sheet (200S) such that anode active material portions (220) extending in a first direction (d4) and second direction (d3) applied with an anode active material and anode uncoated portions (230) not applied with an anode active material are alternately disposed on an anode current collector (210) along the first direction (d4), wherein the anode active material portion (220) includes an anode boundary portion (220B) forming a boundary between the anode active material portion (220) and the anode uncoated portion (230);
manufacturing a cathode sheet (300S) such that a cathode active material portion (320) extending in a first direction (d3) and second direction (d4) applied with a cathode active material and a cathode uncoated portion (330) not applied with a cathode active material are alternately disposed on a cathode current collector (310) along the first direction (d4), wherein the each of the cathode active material portions (320) includes a loading reduction region (300DA) in which the loading amount of the cathode active material gradually decreases along the first direction (d4) on both sides of a central part (300C) of the loading reduction region (300DA);
slitting each of the anode uncoated portions (230) and the anode active material portions (220) in a direction parallel to the second direction (d3) to manufacture anodes (200);
slitting each of the cathode uncoated portions (330) and the cathode active material portions (320) in a direction parallel to the second direction (d3) to manufacture cathodes (300), wherein the cathode active material portion (320) is slitted at the central part (C) of the loading reduction region (300DA) along the second direction (d3); and
rolling one of the anodes (200) and one of the cathodes (300) together with a separator (400) to form a jelly roll structure,
wherein the cathode active material portion (320) of said one of the cathodes (300) includes a loading reduction portion (300D) that is disposed at one end part of said one of the cathodes (300) and in which the loading amount of the cathode active material is smaller than that of the adjacent region,
in the jelly roll structure, the anode boundary portion (220B) is positioned at a portion corresponding to the loading reduction portion based on a direction perpendicular to the first direction (d4).

12. The method for manufacturing an electrode assembly (100) according to claim 11 wherein:
in the jelly roll structure, the anode uncoated portion (230) is extended in a first direction, and the cathode uncoated portion (330) is extended in a second direction (d2) opposite to the first direction (d1, d4).

## Patentansprüche

1. Elektrodenanordnung (100), umfassend:
eine Anode (200);
eine Kathode (300); und
einen Separator (400), der zwischen der Anode (200) und der Kathode (300) angeordnet ist,
wobei die Anode (200), die Kathode (300) und der Separator (400) zusammengerollt sind, um eine Jelly-Roll-Struktur (100S) zu bilden,
wobei die Anode (200) einen Anoden-Stromkollektor (210) und einen Anoden-Aktivmaterialabschnitt (220) umfasst, der durch Aufbringen eines Anoden-Aktivmaterials auf den Anoden-Stromkollektor (210) gebildet ist,
wobei die Kathode (300) einen Kathoden-Stromkollektor (310) und einen Kathoden-Aktivmaterialabschnitt (320) umfasst, der durch Aufbringen eines Kathoden-Aktivmaterials auf den Kathoden-Stromkollektor (310) gebildet ist,
wobei sich ein unbeschichteter Anodenabschnitt (230), auf den das Anoden-Aktivmaterial nicht aufgebracht ist, von dem Anoden-Stromkollektor (210) in einer ersten Richtung (d1) erstreckt,
wobei sich ein unbeschichteter Kathodenabschnitt (330), auf den das Kathoden-Aktivmaterial nicht aufgebracht ist, von dem Kathoden-Stromkollektor (310) in einer zweiten Richtung (d2) entgegengesetzt zu der ersten Richtung (d1) erstreckt,
wobei der Anoden-Aktivmaterialabschnitt (220) einen Anoden-Grenzabschnitt (220B) umfasst, der eine Grenze zwischen dem Anoden-Aktivmaterialabschnitt (220) und dem unbeschichteten Anodenabschnitt (230) bildet,
**dadurch gekennzeichnet, dass**
der Kathoden-Aktivmaterialabschnitt (320) einen Bereich mit verringerter Beladungsmenge des Kathoden-Aktivmaterials umfasst, der an einem Endteil der Kathode (300) in der ersten Richtung (d1) angeordnet ist, wobei der Bereich mit verringerter Beladungsmenge ein Abschnitt ist, in dem die Beladungsmenge des Kathoden-Aktivmaterials kleiner als die eines benachbarten Bereichs ist, und
der Anoden-Grenzabschnitt (220B) an einem Abschnitt angeordnet ist, der dem Bereich mit verringerter Beladungsmenge (320D) des Kathoden-Aktivmaterialabschnitts (320) entspricht, basierend auf einer Richtung senkrecht zu der ersten Richtung (d1).

2. Elektrodenanordnung (100) nach Anspruch 1, wobei:
der Bereich mit verringerter Beladungsmenge (320D) derart gebildet ist, dass die Beladungsmenge des Kathoden-Aktivmaterials allmählich in der ersten Richtung (d1) abnimmt.

3. Elektrodenanordnung (100) nach Anspruch 1 oder 2, wobei:
die erste Richtung (d1) und die zweite Richtung (d2) Richtungen parallel zu der Höhenrichtung der Jelly-Roll-Struktur sind.

4. Elektrodenanordnung (100) nach einem der Ansprüche 1 bis 3, wobei:
der unbeschichtete Anodenabschnitt (230) sich weiter als der Separator (400) in der ersten Richtung (d1) erstreckt, und
der unbeschichtete Kathodenabschnitt (330) sich weiter als der Separator (400) in der zweiten Richtung (d2) erstreckt.

5. Elektrodenanordnung (100) nach einem der Ansprüche 1 bis 4,
ferner umfassend eine isolierende Schicht (500n, 500p), die auf der Anode (200) und/oder der Kathode (300) ausgebildet ist,
wobei die isolierende Schicht (500n), die auf der Anode (200) ausgebildet ist, zumindest einen Teil des unbeschichteten Anodenabschnitts (230) und des Anoden-Aktivmaterialabschnitts (220) bedeckt, und
die isolierende Schicht (500p), die auf der Kathode (300) ausgebildet ist, zumindest einen Teil des unbeschichteten Kathodenabschnitts (330) und des Kathoden-Aktivmaterialabschnitts (320) bedeckt.

6. Elektrodenanordnung (100) nach Anspruch 5, wobei:
die isolierende Schicht (500n), die auf der Anode (200) ausgebildet ist, so ausgebildet ist, dass sie einen Endteil des Anoden-Aktivmaterialabschnitts (220) entlang der ersten Richtung (d1) und einen dazu benachbarten Teil des unbeschichteten Anodenabschnitts (230) bedeckt, und
die isolierende Schicht (500p), die auf der Kathode (300) ausgebildet ist, so ausgebildet ist, dass sie einen Endteil des Kathoden-Aktivmaterialabschnitts (320) entlang der zweiten Richtung (d2) und einen dazu benachbarten Teil des unbeschichteten Kathodenabschnitts (330) bedeckt.

7. Elektrodenanordnung (100) nach Anspruch 5 oder 6, wobei:
die isolierende Schicht (500n), die auf der Anode (200) ausgebildet ist, an einer Stelle angeordnet ist, die nicht mit dem Bereich mit verringerter Beladungsmenge überlappt, basierend auf einer Richtung senkrecht zu der ersten Richtung (d1).

8. Elektrodenanordnung (100) nach einem der Ansprüche 1 bis 7, wobei:
zumindest Teilabschnitte des unbeschichteten Anodenabschnitts (230) und des unbeschichteten Kathodenabschnitts (330) in der Form einer Vielzahl von Segmentstücken (330F) verarbeitet sind, die unabhängig voneinander gebogen werden können.

9. Elektrodenanordnung (100) nach einem der Ansprüche 1 bis 8, wobei der Kathoden-Aktivmaterialabschnitt (320) einen Kathoden-Grenzabschnitt (320B) umfasst, in dem die Beladungsmenge des Kathoden-Aktivmaterials allmählich abnimmt und der eine Grenze zwischen dem Kathoden-Aktivmaterialabschnitt (320) und dem unbeschichteten Kathodenabschnitt (330) bildet;
wobei die Menge des Kathoden-Aktivmaterials in dem Kathoden-Grenzabschnitt (320B) kleiner ist als die Menge des Anoden-Aktivmaterials des Anoden-Aktivmaterialabschnitts (220), der dem Kathoden-Grenzabschnitt (320B) entspricht, basierend auf der Richtung senkrecht zu der zweiten Richtung (d2).

10. Elektrodenanordnung (100) nach einem der Ansprüche 1 bis 9, wobei das N/P-Verhältnis der Elektrodenanordnung (100) größer als 1 ist.

11. Verfahren zum Herstellen einer Elektrodenanordnung (100), wobei das Verfahren die folgenden Schritte umfasst:
Herstellen einer Anodenplatte (200S), so dass Anoden-Aktivmaterialabschnitte (220), die sich in einer ersten Richtung (d4) und einer zweiten Richtung (d3) erstrecken und mit einem Anoden-Aktivmaterial aufgebracht sind, und unbeschichtete Anodenabschnitte (230), die nicht mit einem Anoden-Aktivmaterial aufgebracht sind, abwechselnd auf einem Anoden-Stromkollektor (210) entlang der ersten Richtung (d4) angeordnet sind, wobei der Anoden-Aktivmaterialabschnitt (220) einen Anoden-Grenzabschnitt (220B) umfasst, der eine Grenze zwischen dem Anoden-Aktivmaterialabschnitt (220) und dem unbeschichteten Anodenabschnitt (230) bildet;
Herstellen einer Kathodenplatte (300S), so dass ein Kathoden-Aktivmaterialabschnitt (320), der sich in einer ersten Richtung (d3) und einer zweiten Richtung (d4) erstreckt und mit einem Kathoden-Aktivmaterial aufgebracht ist, und ein unbeschichteter Kathodenabschnitt (330), der nicht mit einem Kathoden-Aktivmaterial aufgebracht ist, abwechselnd auf einem Kathoden-Stromkollektor (310) entlang der ersten Richtung (d4) angeordnet sind, wobei jeder der Kathoden-Aktivmaterialabschnitte (320) einen Bereich mit verringerter Beladungsmenge (300DA) umfasst, in dem die Beladungsmenge des Kathoden-Aktivmaterials allmählich entlang der ersten Richtung (d4) auf beiden Seiten eines zentralen Teils (300C) des Bereichs mit verringerter Beladungsmenge (300DA) abnimmt;
Schlitzen jedes der unbeschichteten Anodenabschnitte (230) und der Anoden-Aktivmaterialabschnitte (220) in einer Richtung parallel zu der zweiten Richtung (d3), um Anoden (200) herzustellen;
Schlitzen jedes der unbeschichteten Kathodenabschnitte (330) und der Kathoden-Aktivmaterialabschnitte (320) in einer Richtung parallel zu der zweiten Richtung (d3), um Kathoden (300) herzustellen, wobei der Kathoden-Aktivmaterialabschnitt (320) an dem zentralen Teil (C) des Bereichs mit verringerter Beladungsmenge (300DA) entlang der zweiten Richtung (d3) geschlitzt ist; und
Zusammenrollen einer der Anoden (200) und einer der Kathoden (300) mit einem Separator (400), um eine Jelly-Roll-Struktur zu bilden,
wobei der Kathoden-Aktivmaterialabschnitt (320) der einen der Kathoden (300) einen Bereich mit verringerter Beladungsmenge (300D) umfasst, der an einem Endteil der einen der Kathoden (300) angeordnet ist und in dem die Beladungsmenge des Kathoden-Aktivmaterials kleiner als die des benachbarten Bereichs ist,
in der Jelly-Roll-Struktur der Anoden-Grenzabschnitt (220B) an einem Abschnitt positioniert ist, der dem Bereich mit verringerter Beladungsmenge entspricht, basierend auf einer Richtung senkrecht zu der ersten Richtung (d4).

12. Verfahren zum Herstellen einer Elektrodenanordnung (100) nach Anspruch 11, wobei:
in der Jelly-Roll-Struktur der unbeschichtete Anodenabschnitt (230) sich in einer ersten Richtung erstreckt und der unbeschichtete Kathodenabschnitt (330) sich in einer zweiten Richtung (d2) entgegengesetzt zu der ersten Richtung (d1, d4) erstreckt.

## Revendications

1. Ensemble d'électrode (100) comprenant :
une anode (200) ;
une cathode (300) ; et
un séparateur (400) disposé entre l'anode (200) et la cathode (300),
l'anode (200), la cathode (300) et le séparateur (400) étant enroulés ensemble pour former une structure en Jelly Roll (100S),
l'anode (200) comprenant un collecteur de courant anodique (210) et une partie de la matière active d'anode (220) formée par l'application d'une matière active d'anode sur le collecteur de courant anodique (210),
la cathode (300) comprenant un collecteur de courant cathodique (310) et une partie de la matière active de cathode (320) formée par l'application d'une matière active de cathode sur le collecteur de courant cathodique (310),
une partie non revêtue de l'anode (230), sur laquelle la matière active d'anode n'est pas appliquée parmi le collecteur de courant anodique (210), s'étendant dans une première direction (d1),
une partie non revêtue de la cathode (330), sur laquelle la matière active de cathode n'est pas appliquée parmi le collecteur de courant cathodique (310), s'étendant dans une deuxième direction (d2) dans le sens opposé à la première direction (d1),
la partie de matière active d'anode (220) comprenant une partie de limite de l'anode (220B) formant une démarcation entre la partie de matière active d'anode (220) et la partie non revêtue de l'anode (230),
**caractérisé en ce que**
la partie de matière active de cathode (320) comprend une partie de réduction de la charge disposée sur une partie terminale de la cathode (300) dans la première direction (d1), la partie de réduction de la charge étant une partie dans laquelle la quantité de charge de matière active de cathode est inférieure à celle d'une zone adjacente, et
la partie limite de l'anode (220B) étant disposée sur une partie correspondant à la partie de réduction de la charge (320D) de la partie de matière active de cathode (320), selon une direction perpendiculaire à la première direction (d1).

2. Ensemble d'électrode (100) selon la revendication 1,
la partie de réduction de la charge (320D) étant formée de sorte que la quantité de charge de la matière active de cathode diminue progressivement au fur et à masure qu'elle avance dans la première direction (d1).

3. Ensemble d'électrode (100) selon la revendication 1 ou 2,
la première direction (d1) et la deuxième direction (d2) étant des directions parallèles au sens de la hauteur de la structure en Jelly Roll.

4. Ensemble d'électrode (100) selon une des revendications 1 à 3,
la partie non revêtue de l'anode (230) étant déployée plus que le séparateur (400) dans la première direction (d1), et
la partie non revêtue de la cathode (330) étant déployée plus que le séparateur (400) dans la deuxième direction (d2).

5. Ensemble d'électrode (100) selon une des revendications 1 à 4,
comprenant en outre une couche isolante (500n, 500p) formée sur au moins une de l'anode (200) et de la cathode (300),
la couche isolante (500n) formée sur l'anode (200) couvrant au moins une partie de la partie non revêtue de l'anode (230) et de la partie de matière active d'anode (220), et
la couche isolante (500p) formée sur la cathode (300) couvrant au moins un élément de la partie non revêtue de la cathode (330) et de la partie de matière active de la cathode (320).

6. Ensemble d'électrode (100) selon la revendication 5,
la couche isolante (500n) formée sur l'anode (200) étant formée de façon à couvrir une partie terminale de la partie de matière active d'anode (220) dans la première direction (d1) et une partie de la partie non revêtue de l'anode (230) adjacente à celle-ci, et
la couche isolante (500p) formée sur la cathode (300) étant formée de façon à couvrir une partie terminale de la partie de matière active de cathode (320) dans la deuxième direction (d2) et une partie de la partie non revêtue de la cathode (330) adjacente à celle-ci.

7. Ensemble d'électrode (100) selon la revendication 5 ou 6,
la couche isolante (500n) formée sur l'anode (200) étant disposée en un point qui ne chevauche pas la partie de réduction de la charge, selon une direction perpendiculaire à la première direction (d1).

8. Ensemble d'électrodes (100) selon une des revendications 1 à 7,
au moins des sections partielles de la partie non revêtue de l'anode (230) et de la partie non revêtue de la cathode (330) étant traitées sous forme d'une pluralité de pièces de segment (330F) pouvant être pliées indépendamment les unes des autres.

9. Ensemble d'électrode (100) selon une des revendications 1 à 8, la partie de matière active de cathode (320) comprenant une partie limite de cathode (320B) dans laquelle la quantité de charge de la matière active de cathode diminue progressivement, et qui forme une démarcation entre la partie de la matière active de cathode (320) et la portion non revêtue de la cathode (330) ;
la quantité de la matière active de cathode dans la partie limite de cathode (320B) étant inférieure à la quantité de matière active d'anode de la partie de matière active d'anode (220) correspondant à la partie limite de cathode (320B), selon la direction perpendiculaire à la deuxième direction (d2).

10. Ensemble d'électrode (100) selon une des revendications 1 à 9, le ratio N/P de l'ensemble d'électrode (100) étant supérieur à 1.

11. Procédé de fabrication d'un ensemble d'électrode (100), le procédé comprenant les étapes suivantes :
fabrication d'une feuille d'anode (200S) telle que des parties de matière active d'anode (220) s'étendant dans une première direction (d4) et une deuxième direction (d3) appliquées avec une matière active d'anode et des parties non revêtues de l'anode (230) non appliquées avec une matière active d'anode sont disposées en s'alternant sur un collecteur de courant anodique (210) dans la première direction (d4), la partie de matière active d'anode (220) comprenant une partie limite de l'anode (220B) formant une démarcation entre la partie de matière active d'anode (220) et la partie non revêtue de l'anode (230) ;
fabrication d'une feuille cathodique (300S) telle qu'une partie de matière active de cathode (320) déployée dans une première direction (d3) et une deuxième direction (d4) appliquée avec une matière active de cathode et une partie de cathode non revêtue (330) non appliquée avec une matière active de cathode sont disposées en s'alternant sur un collecteur de courant cathodique (310) dans la première direction (d4), chacune des parties de matière actives de cathode (320) comprenant une zone de réduction de la charge (300DA) dans laquelle la quantité de charge de la matière active de cathode diminue progressivement dans la première direction (d4) des deux côtés d'une partie centrale (300C) de la zone de réduction de la charge (300DA) ;
découpe de chacune des parties non revêtues de l'anode (230) et des parties de matière active d'anode (220) dans une direction parallèle à la deuxième direction (d3) pour fabriquer des anodes (200) ;
découpe de chacune des parties non revêtues de cathode (330) et des parties de matière active de cathode (320) dans une direction parallèle à la deuxième direction (d3) pour fabriquer des cathodes (300), la partie de matière active de cathode (320) étant fendue dans la partie centrale (C) de la zone de réduction de la charge (300DA) dans la deuxième direction (d3) ; et
laminage d'une des anodes (200) et d'une des cathodes (300), conjointement avec un séparateur (400), pour former une structure Jelly Roll,
la partie de matière active de cathode (320) de ladite une des cathodes (300) comprenant une partie de réduction de la charge (300D) disposée à une partie terminale de ladite une des cathodes (300), et dans laquelle la quantité de charge de matière active de cathode est inférieure à celle de la zone adjacente,
dans la structure en Jelly Roll, la partie limite de l'anode (220B) étant positionnée dans une partie correspondant à la partie de réduction de la charge d'après une direction perpendiculaire à la première direction (d4).

12. Procédé de fabrication d'un ensemble d'électrode de type Jelly Roll (100) selon la revendication 11,
dans la structure Jelly Roll, la portion non revêtue d'anode (230) étant déployée dans une première direction, et la portion non revêtue de cathode (330) étant déployée dans une deuxième direction (d2) faisant face à la première direction (d1, d4).
